# EUROPEAN PATENT SPECIFICATION

(11) **EP 0 648 802 B1**
(45) Date of publication and mention of the grant of the patent: **23.12.1998**
(21) Application number: 94307288.4
(22) Date of filing: 05.10.1994
(51) Int. Cl.: C08J 5/18, C08K 3/34, C08K 3/36

(54) **Polyester films containing precipitated silica particles and calcined clay**
Gefällte Kieselsäureteilchen und calcinierten Ton enthaltende Polyesterfolien
Feuilles en polyester contenant des particules de silice précipitée et d'argile calcinée

(30) Priority: 15.10.1993 US 138540
(43) Date of publication of application: 19.04.1995
(73) Proprietor: ICI AMERICAS INC., Wilmington, Delaware 19850-5391 (US)
(72) Inventor: Siddiqui, Junaid Ahmed, Richmond, Virginia 23237 (US); Mills, Paul David Alan, Darlington, County Durham D13 8BH (GB)
(74) Representative: Humphries, Martyn

(56) References cited:
- EP-A- 0 261 430
- EP-A- 0 532 172
- DD-A- 288 162
- GB-A- 2 082 192
- DATABASE WPI Week 9141, Derwent Publications Ltd., London, GB; AN 91-298596 & JP-A-3 197 170 (TOMOEGAWA PAPER MFG KK)

## Description

This invention relates to a polymeric film, and in particular to a polymeric film having a combination of fillers therein and to a method of making such film.

Films or sheets of linear polyester have been commercially available for many years. The polymeric film has excellent draw orientation and has proved to be especially well suited for the bi-axial film orientation process resulting in films of outstanding properties. Polymeric film also known as polyethylene terephthalate or PET is strong and has excellent inherent chemical and thermal stability properties. The polymer preparation and film manufacturing processes are well known to those skilled in the art and are recited in many texts, including the Encyclopedia of Polymer Science and Engineering, second edition, volume 12, by John Wiley and Sons, Inc., pages 1 through 313; and numerous U.S. and foreign patents.

It is known that polymeric films often have poor handling properties which may result in difficulties in winding the films into high quality reels and inefficient passage through processing equipment, for example, slitting machines. Film handling properties can be improved by increasing the surface roughness of the film, suitably by the use of coatings, or alternatively by incorporating fillers, i.e. organic or inorganic particles into the film. A combination of coatings and fillers may be used to improve film handling properties. The problem with using coatings to improve film handleability is that they limit the range of uses in which the film may be employed because of the difficulty in applying additional coating layers which may be required, for example, to provide antistatic, adhesion promoting or release properties.

A wide range of fillers have been incorporated into films to improve the handling properties such as: the glass spheres and fumed silica described in U.S. Patents 5,132,356 and 5,137,939; and the inorganic materials taught in U.S. Pat. No. 4,274,025 which include synthetic silica, calcium borate, calcium carbonate, magnesium carbonate, barium sulphate, calcium or aluminum silicate and glass spheres. Notwithstanding the improvements these fillers provide, the films containing such fillers are typically restricted to particular uses.

The incorporation of minute particle fillers into films presents a number of problems particularly during the processing of the polymer. It is typically desirable to incorporate the fillers into the resin system prior to the polymerization. However, this requires subjecting the fillers to the polymerization reaction and associated reaction conditions which presents additional filler considerations. The process conditions such as heat, time, agitation and pressure necessary to complete the polymerization may cause the fillers to react, decompose, agglomerate, etc. Accordingly, the processing characteristics of the fillers can present numerous processing problems.

Optical clarity and transparency are important criteria in a wide range of film applications, such as packaging, metallized films, reprographic films and films for general industrial use. There is a continuing need for films exhibiting high light transmittance, low haze and excellent handling properties and for fillers that are more universal in their areas of use and processability. In addition, there is currently an advancing need for films comprising filler systems which are less likely to cause surface scratching when two or more layers of such film come in intimate contact.

The present invention surprisingly overcomes or substantially reduces one or more of the aforementioned problems.

Accordingly, the present invention provides a polyester film that has excellent handling properties, including improved anti-blocking, reduced creasing, pimpling and machine-direction (MD) wrinkles.

Another aspect of the present invention is to provide a film comprising filler particles which are softer such that during the processing and subsequent use of the film it does not tend to scratch the surface of the adjacent layer of film.

Yet another aspect of the present invention is to provide a polyester film that not only has excellent handling properties but also has low haze, and good optical clarity.

A still further aspect of the present invention is to provide a polyester film incorporating a combination of fillers that have good processing characteristics.

Another aspect of the present invention is to provide a polyester film incorporating a combination of fillers that do not react, decompose, or agglomerate when subjected to the polymerization reaction and reaction conditions.

### Summary of the Invention

The present invention relates to films or sheets of linear polyester having incorporated therein a combination of precipitated silica and calcined clay having certain particle sizes and present in specific amounts based upon the weight of the polyester film. The addition of these fillers improves several properties of the film, including the handleability while maintaining acceptable optical clarity and transparency and to the method of making such films or sheets.

### Detailed Description of the Invention

The present invention relates to a polyester film comprising a polyester polymer having incorporated therein a combination of (a) precipitated silica particles having an average particle size ranging between 1 and 15 microns present in an amount ranging between 25 ppm and 500 ppm by weight based on the weight of the polymer and (b) calcined clay present in an amount not exceeding 10,000 ppm by weight based on the weight of the polymer.

The precipitated silica particles that are useful in the practice of the invention are comprised of SiO₂ and may be modified or unmodified . These silica particles can be modified with various techniques, processes and compounds, particularly those that tend to make the particles more hydrophobic. Preferred precipitated silica particles are sold under the tradename SYLOID, available through W.R. Grace.

The precipitated silica particles of the present invention typically have an average particle size of between 1 and 10 microns, more typically from 2 to 8 microns. The precipitated silica particles are present in a small amount that ranges between 30 ppm and 350 ppm, preferably the amount of precipitated silica particles ranges between 50 ppm and 250 ppm, most preferably the amount ranges between 100 and 200 ppm, by weight based on the weight of the polymer.

The calcined clay useful in the present invention may be formed by the conventional processing of hydrous clay. One general method of forming calcined clay is as follows: first dry milling the hydrous clay, followed by air classification and purification, then calcinating the clay by subjecting it to at least 1000°C and further processing it by sand milling in water and finally forming an ethylene glycol slurry by removing the water by azeotropic distillation.

A given sample of calcined clay has an average particle size in microns which refers to the size of about fifty percent or more of the particles in such sample, as measured by a conventional particle size analyzer. The calcined clay of the present invention has an average particle size of less than 1 micron, preferably less than 0.85 microns, most preferably between 0.25 and 0.75 microns. The calcined clay may be introduced into the polymer in an ethylene glycol slurry comprising up to 55% solids, typically 50% solids, by weight based upon the total weight of the slurry. A preferred slurry of calcined clay is sold by English China Clay International, under the tradename InFilm 3117, having an average particle size of 0.3 microns, as measured by a Microtrac Model II - Particle Size Analyzer and a particle size distribution of 98% below 2 microns and 90% below 0.5 microns.

The calcined clay is present in the polyester film in an amount not exceeding 10,000 ppm, typically not exceeding 8,000 ppm, preferably in a range between 1000 and 5000 ppm, by weight based on the weight of the polymer in the polyester film.

The required quantities of precipitated silica particles and calcined clay can be added to the polyester film forming material at any point in the film manufacturing process prior to the extrusion of the polymer. In the general practice of this invention, it is preferred to incorporate the precipitated silica and calcined clay particles into the polyester during its production by polymerization. A convenient procedure is to add the particles to the polycondensation mixture used for the production of the polyester. It has been found particularly desirable to add such particles during the manufacture of the polyester polymer as a slurry after the ester interchange reaction in which monomers are formed. The particles can, for example, be added as a slurry in the glycol from which the polyester is formed prior to the commencement of the polycondensation.

The polymer useful in the manufacture of the film of the invention is well known to those skilled in the art and may be obtained from any film-forming, polymeric material. Synthetic linear polyester polymers; which may be obtained by condensing one or more dicarboxylic acids or their lower alkyl (up to 6 carbon atoms) diesters, e.g., terephthalic acid, isophthalic acid, phthalic acid, 2,5-, 2,6- or 2,7-naphthalene dicarboxylic acid, succinic acid, sebacic acid, adipic acid, azelaic acid, 4,4'-diphenyldicarboxylic acid, hexahydroterephthalic acid or 1,2-bis-p-carboxy-phenoxyethane (optionally with a monocarboxylic acid, such as pivalic acid) with one or more glycols, e.g., ethylene glycol, 1,3-propanediol, 1,4-butanediol, neopentyl glycol and 1,4-cyclohexanedimethanol; have been found particularly effective in forming films of the present invention. A polyethylene terephthalate film is particularly preferred, especially such a film which has been biaxially oriented, typically at a temperature in the range of 70°C to 125°C, and preferably heat set, typically at a temperature in the range of 150°C to 250°C, for example as described in British Patent 838,708.

The polyester film prepared from the composition according to the present invention may be uniaxially or biaxially oriented, but is preferably biaxially oriented by drawing in two mutually perpendicular directions in the plane of the film to achieve a satisfactory combination of mechanical and physical properties. Preferably, the film is biaxially oriented by sequential stretching in two mutually perpendicular directions, typically at a temperature in the range of 70°C to 150°C. Such stretching is described in many patents, including British Patent No. 838,708. These techniques are well known to those skilled in the polyester film manufacture art.

The polyester film of the present invention is typically formed in a thickness not exceeding 175 microns, more typically not exceeding 100 microns, preferably not exceeding 50 microns, most preferably in a range between 9 and 25 microns.

A conventional coating medium may optionally be applied to one or both surfaces of the polyester film of this invention. Such coatings are customarily added to improve the adhesive or anti-static properties. The chemical compositions of these coatings are well known to those skilled in the art and are described in numerous patents and publications. The coating medium may be applied to an uniaxially oriented or a biaxially oriented film substrate. In a simultaneous biaxially oriented stretching process, the coating medium is suitably applied to the substrate either before commencement or after conclusion of the stretching operation. In a sequential biaxially oriented stretching process, preferably the coating medium is applied to the film substrate between the two stretching stages i.e. between the longitudinal and transverse stretchings of a biaxial stretching operation. Such a sequence of stretching and coating is especially preferred for the production of a coated polyethylene terephthalate film. Preferably the film is first stretched in the longitudinal direction over a series of rotating rollers, then coated with the coating medium, and lastly stretched transversely in a stenter oven, preferably followed by heat setting of the coated film.

The optional coating medium may be applied to the polyester film as an aqueous dispersion or solution in an organic solvent by any suitable conventional coating technique such as by dip coating, bead coating, gravure, reverse roller coating or slot coating.

The temperatures applied to the coated film during the subsequent stretching and/or heat setting are effective in drying the aqueous medium, or the solvent in the case of solvent-applied compositions, and also in coalescing and forming the coating into a continuous and uniform layer.

The optional coating layer may be applied to one or both surfaces of the polyester substrate, and one or both coating layers may be subjected to coating with additional material. The function of the coating layer may thus be as a primer layer to aid the subsequent deposition of additional coating layer(s) or as a coating to provide improved handling properties to the film.

The one or more polymeric layers of the polyester film substrate and any optional coating layers used to form a composition may conveniently contain any of the additives conventionally employed in the manufacture of thermoplastics polyester films. Thus, such agent as dyes, pigments, voiding agents, lubricants, anti-oxidants, anti-blocking agents, surface active agents, slip aids, gloss-improvers, prodegradants, ultra-violet light stabilizers, viscosity modifiers, dispersion stabilizers, fillers and filler combinations may be incorporated in the polyester film substrate and/or coating layer(s), as appropriate.

The invention can be better understood by referring to the following specific examples which teach several embodiments of this invention.

### EXAMPLES

In these Examples, the following materials and test procedures were employed:
SYLOID-74: Precipitated Silica Particles available through W.R. Grace Inc. having an average particle size of 7-8 microns.
SYLOID-150: Precipitated Silica Particles available through W.R. Grace Inc. having an average particle size of 2.0 microns.
SYLOID-F150: Precipitated Silica Particles available through W.R. Grace Inc. having an average particle size of 2.1 microns.
SYLOID-234: Precipitated Silica Particles available through W.R. Grace Inc. having an average particle size of 2.5 microns.
SYLOID-235: Precipitated Silica Particles available through W.R. Grace Inc. having an average particle size of 4.0 microns.
Filler Concentration: all filler concentrations are given in parts per million by weight based on the weight of the polymer, unless otherwise specified.
Average Particle Size: all average particle sizes are in microns as measured on a Microtrac Model II - Particle Size Analyzer.
Haze %: was measured by a Gardner Hazemeter.
MD rating: is an evaluation of the films winding quality, by high speed winding a minimum of 15,000 feet of the film onto a core at a line speed of about 1800 feet/min. and evaluating the quality of the film by measuring, in inches, the width of the raised film lines and dividing the total of such lines by the total width of the film and normalizing to a range of from 1 to 10 with 1 representing 0 visible lines.
Speckle Rating: is an evaluation of the optical quality of the film surface, by observing the distortion of light reflected off the metallized surface of the film with a rating of 1 representing virtually no speckles.

### EXAMPLE 1

In a 25-gallon Ross mixer, 10 gallons of ethylene glycol was charged under agitation, followed by 0.284 Kg of Syloid-74. Then under agitation about 6.82 Kg of calcined clay slurry about 51% solids in ethylene glycol, sold by English China Clay International under the trade name InFilm 3117, having an average particle size of about 0.3 microns as measured on a Microtrac Model II - Particle Size Analyzer, having a particle size distribution of 98% below 2 microns and 90% below 0.5 microns. In a separate vessel about 2100 liters of dimethyl terephthalate (DMT) was reacted at about 220°C with about 1260 liters of ethylene glycol to form bishydroxyethylene terephthalate (monomer). After the mixed filler slurry had been mixed for about 1 hour it was then pumped into the monomer while the monomer was continually agitated. The temperature of the monomer composition was then elevated to about 240°C and continually agitated until substantially all the excess ethylene glycol was removed, approximately 10 minutes.

After the monomer/mixed filler composition was then transferred to a conventional autoclave, the molten monomer was polymerized at about 285-290°C at a pressure of about 0.4 millimeters of mercury under agitation. The resulting polyethylene terephthalate was cooled to about room temperature and converted to chips using a conventional pelletizer.

The dried chips were then extruded using conventional film manufacturing equipment at about 285°C into film and then biaxially oriented by stretching in sequence, using conventional equipment, in mutually perpendicular directions at a draw ratio of about 3.1:1 in each direction followed by heat setting at about 220°C. The resulting filled film product had a total thickness of about 12 microns and haze quality of about 3.2% as measured by the Gardner Hazemeter. In addition to good optical clarity, the film was also evaluated for its winding quality by high speed winding an excess of 20,000 feet* of film onto a core at a line speed of about 1800 feet/min. and evaluating the quality of the film by visually inspecting the external surface of the rolled film to observe that virtually no blocking pimples, no MD wrinkles or creases were present.
* 1 foot ≙ 0,3048 meter

### EXAMPLES 2-7

Examples 2-7 were prepared by the procedure of Example 1 with the quantities and particle sizes of the fillers being varied as summarized in Table 1. Table 1 also gives the results of the evaluation of these filled films for percent haze, machine direction line rating and speckle rating.

**TABLE 1**

| EX. | FILLERS | FILLER CONC. | AVERAGE PARTICLE SIZE | HAZE % | MD RATING | SPECKLE RATING |
|---|---|---|---|---|---|---|
| 2 | SYLOID | 125 | 7-8 | 2.9 | 1 | 10 |
| | Calcined Clay | 2400 | 0.3 | | | |
| | | | | | | |
| 3 | SYLOID | 25 | 7-8 | 2.5 | 5 | 10 |
| | Calcined Clay | 2400 | 0.3 | | | |
| | | | | | | |
| 4 | SYLOID | 125 | 7-8 | 2.9 | 1 | 10 |
| | Calcined Clay | 2400 | 0.3 | | | |
| | | | | | | |
| 5 | SYLOID 150 | 125 | 2.0 | 2.8 | 5 | 6 |
| | Calcined Clay | 2400 | 0.3 | | | |
| | | | | | | |
| 6 | SYLOID 234 | 125 | 2.5 | 2.9 | 6 | 7 |
| | Calcined Clay | 2400 | 0.3 | | | |
| | | | | | | |
| 7 | SYLOID 235 | 125 | 4.0 | 2.9 | 5 | 7 |
| | Calcined Clay | 2400 | 0.3 | | | |
| | | | | | | |
| 8 | SYLOID 74 | 100 | 7-8 | 3.8 | 2 | 8 |
| | Calcined Clay | 3500 | 0.3 | | | |
| | | | | | | |
| 9 | SYLOID-F150 | 500 | 2.1 | 2.9 | 6 | 5 |
| | Calcined Clay | 1200 | 0.3 | | | |

## Claims

1. A polyester film comprising a polyester polymer having incorporated therein a combination of (a) precipitated silica particles having an average particle size ranging between 1 and 15 microns present in an amount ranging between 25 ppm and 500 ppm by weight based on the weight of the polymer and (b) calcined clay present in an amount not exceeding 10,000 ppm by weight based on the weight of the polymer.

2. A film according to claim 1 wherein the precipitated silica particles have an average particle size ranging between 1 and 10 microns.

3. A film according to either one of claims 1 and 2 wherein the precipitated silica particles are present in an amount ranging between 30 ppm and 350 ppm by weight based on the weight of the polymer.

4. A film according to any one of the preceding claims wherein the calcined clay has an average particle size of less than 1 micron.

5. A film according to any one of the preceding claims wherein the calcined clay has an average particle size of less than 0.85 microns.

6. A film according to any one of the preceding claims wherein the calcined clay has an average particle size ranging between 0.25 and 0.75 microns.

7. A film according to any one of the preceding claims wherein the calcined clay is present in an amount ranging between 1,000 ppm and 10,000 ppm by weight based on the weight of the polymer.

8. A film according to any one of the preceding claims wherein the calcined clay is present in an amount ranging between 1,000 ppm and 8,000 ppm by weight based on the weight of the polymer.

9. A film according to any one of the preceding claims wherein the thickness of the film is less than 50 microns.

10. A film according to any one of the preceding claims wherein one or both surfaces of the film are coated with a coating layer.

## Patentansprüche

1. Polyesterfolie die ein Polyesterpolymer beinhaltet, welches in sich eine Kombination vereint aus: (a) gefällten Kieselsäureteilchen, die eine durchschnittliche Teilchengröße zwischen 1 und 15 Mikron aufweisen und die in einer zwischen 25 ppm und 500 ppm liegenden Menge auf Gewichtsbasis in Bezug auf das Gewicht des Polymeren anwesend sind, sowie (b) aus kalziniertem Ton, der in einer 10.000 ppm nicht überschreitenden Menge auf Gewichtsbasis in Bezug auf das Gewicht des Polymeren anwesend ist.

2. Folie gemäß Anspruch 1, in welcher die gefällten Kieselsäureteilchen eine durchschnittliche zwischen 1 und 10 Mikron liegende Teilchengröße aufweisen.

3. Folie gemäß dem einen oder dem anderen der Ansprüche 1 und 2, in welcher die gefällten Kieselsäureteilchen anwesend sind in einer zwischen 30 ppm und 350 ppm liegenden Menge auf Gewichtsbasis in Bezug auf das Gewicht des Polymeren.

4. Folie gemäß irgendeinem der vorhergehenden Ansprüche, in welcher der kalzinierte Ton eine durchschnittliche Teilchengröße von weniger als 1 Mikron aufweist.

5. Folie gemäß irgendeinem der vorhergehenden Ansprüche, in welcher der kalzinierte Ton eine durchschnittliche Teilchengröße von weniger als 0,85 Mikron aufweist.

6. Folie gemäß irgendeinem der vorhergehenden Ansprüche, in welcher der kalzinierte Ton eine durchschnittliche zwischen 0,25 und 0,75 Mikron liegende Teilchengröße aufweist.

7. Folie gemäß irgendeinem der vorhergehenden Ansprüche, in welcher der kalzinierte Ton anwesend ist in einer zwischen 1000 ppm und 10.000 ppm liegenden Menge auf Gewichtsbasis in Bezug auf das Gewicht des Polymeren.

8. Folie gemäß irgendeinem der vorhergehenden Ansprüche, in welcher der kalzinierte Ton anwesend ist in einer zwischen 1000 ppm und 8.000 ppm liegenden Menge auf Gewichtsbasis in Bezug auf das Gewicht des Polymeren.

9. Folie gemäß irgendeinem der vorhergehenden Ansprüche, in welcher die Dicke der Folie geringer ist als 50 Mikron.

10. Folie gemäß irgendeinem der vorhergehenden Ansprüche, in welcher eine oder beide Flächen der Folie mit einer Überzugsschicht bedeckt sind.

## Revendications

1. Film de polyester comprenant un polymère de polyester comportant incorporée en son intérieur une combinaison (a) de particules de silice précipitée présentant une taille de particules moyenne variant entre 1 et 15 microns, présentes selon une quantité variant entre 25 ppm et 500 ppm en poids sur la base du poids du polymère et (b) d'argile calcinée présente selon une quantité n'excédant pas 10.000 ppm en poids sur la base du poids du polymère.

2. Film suivant la revendication 1, dans lequel les particules de silice précipitée présentent une taille de particules moyenne variant entre 1 et 10 microns.

3. Film suivant l'une ou l'autre des revendications 1 et 2, dans lequel les particules de silice précipitée sont présentes selon une quantité variant entre 30 ppm et 350 ppm en poids sur la base du poids du polymère.

4. Film suivant l'une quelconque des revendications précédentes, dans lequel l'argile calcinée présente une taille de particules moyenne de moins de 1 micron.

5. Film suivant l'une quelconque des revendications précédentes, dans lequel l'argile calcinée présente une taille de particules moyenne de moins de 0,85 microns.

6. Film suivant l'une quelconque des revendications précédentes, dans lequel l'argile calcinée présente une taille de particules moyenne variant entre 0,25 et 0,75 microns.

7. Film suivant l'une quelconque des revendications précédentes, dans lequel l'argile calcinée est présente selon une quantité variant entre 1.000 ppm et 10.000 ppm en poids sur la base du poids du polymère.

8. Film suivant l'une quelconque des revendications précédentes, dans lequel l'argile calcinée est présente selon une quantité variant entre 1.000 ppm et 8.000 ppm en poids sur la base du poids du polymère.

9. Film suivant l'une quelconque des revendications précédentes, dans lequel l'épaisseur du film est inférieure à 50 microns.

10. Film suivant l'une quelconque des revendications précédentes, dans lequel une ou les deux surfaces du film est/sont recouverte(s) avec une couche de revêtement.
